# FASCICULE DE BREVET EUROPEEN

(11) **EP 2 254 747 B1**
(45) Date de publication et mention de la délivrance du brevet: **06.06.2012**
(21) Numéro de dépôt: 08871469.6
(22) Date de dépôt: 22.09.2008
(51) Int. Cl.: F02C 7/24, B31D 3/02, B29C 67/00

(54) **PROCEDE DE JONCTION DE PANNEAUX ACOUSTIQUES ALVEOLAIRES**
VERFAHREN ZUM VERBINDEN VON ZELLENFÖRMIGEN AKUSTIKPLATTEN
METHOD FOR JOINING CELLULAR ACOUSTIC PANELS

(30) Priorité: 23.01.2008 FR 0800346
(43) Date de publication de la demande: 01.12.2010
(73) Titulaire: Aircelle, 76700 Gonfreville l'Orcher (FR)
(72) Inventeur: VACHE, Jean-Bernard, F-76600 Le Havre (FR)
(74) Mandataire: Jouanneau, Lionel
(86) Numéro de dépôt international: PCT/FR2008/001317
(87) Numéro de publication internationale: WO 2009/092870

(56) Documents cités:
- EP-A- 0 293 320
- GB-A- 788 769
- JP-A- 11 207 423
- US-A- 2 860 740
- US-A- 4 675 241
- US-A- 5 965 238

## Description

La présente invention se rapporte à un procédé de jonction entre un premier panneau acoustique possédant une structure alvéolaire de type nid d'abeille et un deuxième panneau. Un exemple de l'art antérieur est fourni par le document US 2860740.

Ce procédé est plus particulièrement destiné à l'assemblage de panneaux acoustique équipant une nacelle de turboréacteur.

En effet, les turboréacteurs d'avion sont générateurs d'une pollution sonore importante. Il existe une forte demande visant à réduire cette pollution, et ce d'autant plus que les turboréacteurs utilisés deviennent de plus en plus puissants. La conception de la nacelle entourant un turboréacteur contribue pour une grande partie à la réduction de cette pollution sonore.

Afin d'améliorer d'avantage les performances acoustiques des aéronefs, les nacelles sont dotées de panneaux acoustiques visant à atténuer les bruits dus à la circulation des flux d'air à travers le turboréacteur ainsi qu'aux vibrations des structures de la nacelle.

Les panneaux acoustiques sont des structures de type sandwich bien connues pour absorber ces bruits. Ces panneaux comportent habituellement une ou plusieurs couches de structures à âme alvéolaire (structure couramment appelée « en nid d'abeille »). Ces couches peuvent ensuite être revêtues sur leur face dite externe, c'est-à-dire la plus éloignée radialement de l'axe du moteur, d'une peau imperméable à l'air, dite « pleine », et sur leur face interne, c'est-à-dire la plus proche radialement de l'axe du moteur, d'une peau perforée perméable à l'air, dite « acoustique ».

D'une façon connue, la structure à âme alvéolaire est réalisée à partir d'unité(s) alvéolaire(s) jointes possédant des alvéoles de forme généralement héxagonales ou elliptique.

Les propriétés acoustiques du panneau acoustique, c'est-à-dire son taux d'absorption du bruit en fonction de la fréquence et du niveau sonore du bruit, dépendent notamment de la jonction de la ou des unités alvéolaires.

Le jointage des extrémités latérales est couramment réalisé à l'aide d'une colle moussante, telle que la colle AFM 410®, qui a une importante capacité d'expansion. Les bords adjacents de la ou des unités alvéolaires sont enduits de la colle qui, lors de son expansion, obstrue les alvéoles en créant des surépaisseurs. Ces surépaisseurs présentent l'inconvénient de diminuer la surface acoustique efficace de la structure alvéolaire et aussi de provoquer des ruptures brutales d'impédances qui contribue à la diminution de la performance acoustique du panneau acoustique lors du fonctionnement du turboréacteur.

Par ailleurs, préalablement à leur assemblage, les panneaux alvéolaires sont découpés aux dimensions requises.

Cette opération de découpage créé un bord de jonction au niveau duquel les alvéoles peuvent être écrasées et abîmées, ce qui diminuent encore la performance acoustique finale.

On notera également qu'après l'opération de découpage, le bords de jonction obtenu présente des restes de parois alvéolaires faisant saillie du bord de jonction et qui vont venir perturber l'épaisseur de la zone d'assemblage.

II est également connu de joindre bord à bord de plusieurs unités alvéolaires en ouvrant les alvéoles situées sur les bords destinés à être joints et d'imbriquer les alvéoles ainsi ouvertes les unes dans les autres.

Cependant, la mise en oeuvre d'une telle structure à âme alvéolaire ne convient pas pour une structre à âme alvéolaire ne comportant qu'une unité alvéolaire. De plus, cette mise en oeuvre est complexe.

Afin de résoudre les inconvénients ci-dessus mentionnés, la présente invention se rapporte à un procédé de jonction entre un premier panneau acoustique possédant une structure alvéolaire de type nid d'abeille et un deuxième panneau, comprenant les étapes visant à :
- introduire au moins un mandrin possédant une forme adaptée aux alvéoles dans au moins une alvéole située à proximité d'un bord de jonction du panneau acoustique,
- passer sur ledit bord de jonction du panneau acoustique un galet,
- joindre ensemble le bord de jonction du panneau acoustique avec un bord de jonction du deuxième panneau et les solidariser par application d'un moyen de liaison.

De manière préférentielle, le moyen de liaison est un moyen de collage.

Avantageusement, le moyen de collage est un film de colle appliqué sur au moins l'un des deux bords de jonction.

De manière avantageuse, le deuxième panneau est un panneau acoustique possédant une structure alvéolaire.

Préférentiellement, les étapes d'introduction d'un mandrin et de passage d'un galet sont également réalisées sur le deuxième panneau acoustique.

Avantageusement, un mandrin est introduit dans chacune des alvéoles situées à proximité du bord de jonction.

Avantageusement encore, caractérisé en ce que l'introduction d'un mandrin dans plusieurs alvéoles s'effectue simultanément.

La mise en oeuvre de l'invention sera mieux comprise à l'aide de la description détaillée qui est exposée ci-dessous en regard du dessin annexé.
La figure 1 est une vue schématique d'un dispositif permettant la mise en oeuvre du procédé.
La figure 2 est une représentation schématique d'un panneau acoustique après mise en oeuvre du procédé.
La figure 3 est une représentation de deux panneaux acoustiques une fois joints.

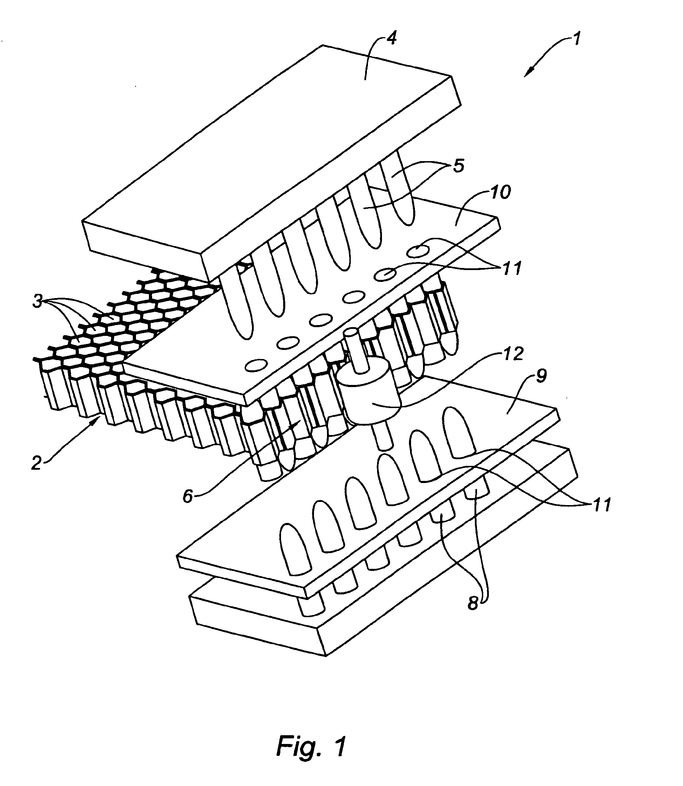

La figure 1 montre un dispositif 1 pour la mise en oeuvre du procédé selon l'invention pour la jonction d'un panneau acoustique 2 présentant une structure alvéolaire comprenant des alvéoles 3 de forme hexagonales.

Ce dispositif comprend un plaque supérieure 4 portant une pluralité de mandrins 5 possédant chacun une section générale de la forme des alvéoles 3 et disposés de manière régulièrement espacés afin que chaque mandrin 5 puisse être introduit dans une alvéole 3 sur deux d'un bord de jonction 6 du panneau acoustique 2.

Le dispositif 1 comprend également une plaque inférieure 7 portant également une pluralité de mandrins 8 possédant chacun une section générale de la forme des alvéoles 3 et disposés de manière régulièrement espacés afin que chaque mandrin 8 puisse être introduit dans une alvéole 3 sur deux du bord de jonction 6 du panneau acoustique 2.

Le dispositif comprend encore des plaques de maintien inférieure 9 et supérieure 10 du panneau acoustique présentant chacun des ouvertures 11 aptes à être traversées par les mandrins 5, 8.

Le dispositif 1 comprend enfin un galet 12 disposé de manière à pouvoir rouler le long du bord de jonction 6 du panneau acoustique 2.

A partir d'un panneau acoustique 2 découpé selon un bord de jonction 6 par lequel il est destiné à être joint avec un autre panneau acoustique, les mandrins 5, 8 des plaques supérieure 4 et inférieure 7 sont introduits à travers les plaques de maintien 9, 10 et à l'intérieur des alvéoles 3 correspondantes.

Chaque mandrin 5 de la plaque supérieure 4 pénètre donc dans une alvéole 3 voisine d'une alvéole 3 à l'intérieur de laquelle un mandrin 8 de la plaque inférieure 7 est introduit.

L'introduction des mandrins 5, 8 à l'intérieur des alvéoles 3 permet de les remettre en forme après une éventuelle déformation ou écrasement due à la découpe du panneau acoustique 2.

Une fois les mandrins 5, 8 introduits dans les alvéoles 3, le bord de jonction 6 est lui-même mis en forme à l'aide du galet 12 qui est passé tout le long du bord de jonction 6.

Ainsi, d'éventuels restes 60 de parois alvéolaires dus à la découpe sont aplanis et écrasés contre le bord de jonction 6.

Les mandrins 5, 8 permettent que le galet 12 n'écrase pas les alvéoles lors de cette opération de formage.

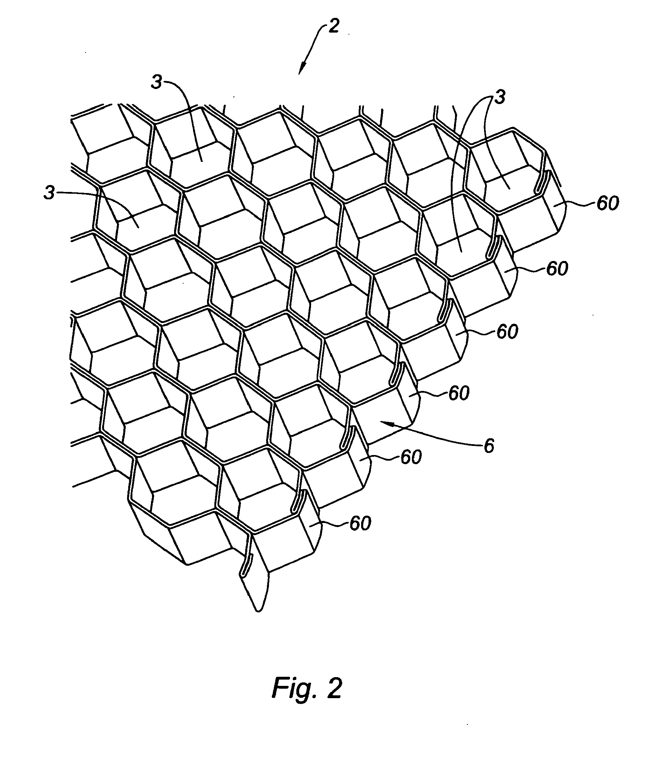

Un panneau acoustique 2 alvéolaire mis en forme à l'aide du dispositif de la figure 1 est montré sur la figure 2.

Le procédé est répété sur un deuxième panneau acoustique 2' selon un bord de jonction 6'.

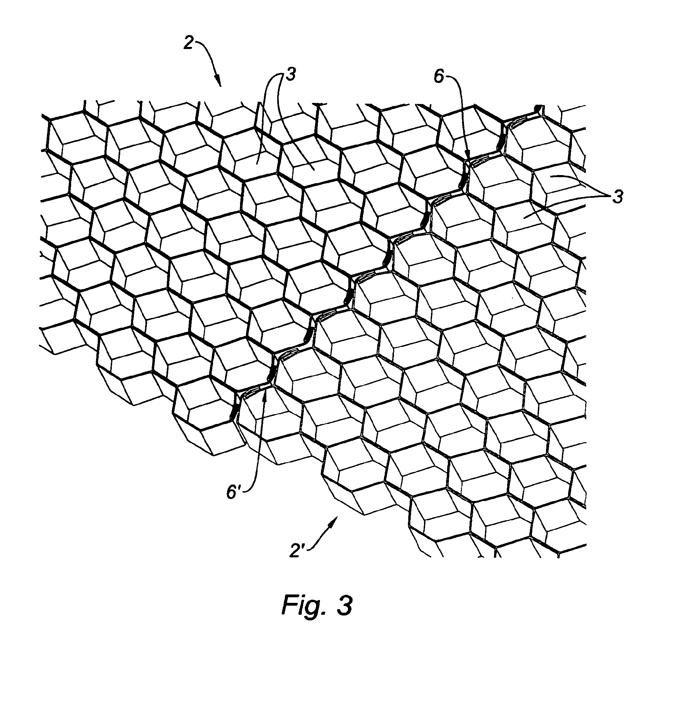

La jonction des deux panneaux acoustiques 2, 2' ainsi conformés s'effectue classiquement par application d'un film de colle sur le bord de jonction et emboîtement. Deux panneaux acoustiques 2, 2' ainsi assemblés sont montrés sur la figure 3.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention. Notamment, un panneau acoustique peut être joint à un panneau non acoustique, et d'autres moyens de collage peuvent être utilisés.

## Revendications

1. Procédé de jonction entre un premier panneau acoustique (2) possédant une structure alvéolaire de type nid d'abeille et un deuxième panneau (2'), comprenant les étapes visant à :
- introduire au moins un mandrin (5, 8) possédant une forme adaptée aux alvéoles (3) dans au moins une alvéole (3) située à proximité d'un bord de jonction (6) du panneau acoustique,
- passer sur ledit bord de jonction du panneau acoustique un galet (12),
- joindre ensemble le bord de jonction du panneau acoustique avec un bord de jonction (6') du deuxième panneau et les solidariser par application d'un moyen de liaison.

2. Procédé selon la revendication 1, **caractérisé en ce que** le moyen de liaison est un moyen de collage.

3. Procédé selon la revendication 2, **caractérisé en ce que** le moyen de collage est un film de colle appliqué sur au moins l'un des deux bords de jonction (6, 6').

4. Procédé selon la revendication 1, **caractérisé en ce que** le deuxième panneau est un panneau acoustique (2') possédant une structure alvéolaire.

5. Procédé selon la revendication 4, **caractérisé en ce que** les étapes d'introduction d'un mandrin (5, 8) et de passage d'un galet (12) sont également réalisées sur le deuxième panneau acoustique (2').

6. Procédé selon l'une quelconque des revendications 1 à 5, **caractérisé en ce que** un mandrin (5, 8) est introduit dans chacune des alvéoles (3) situées à proximité du bord de jonction (6, 6').

7. Procédé selon l'une quelconque des revendications 1 à 6, **caractérisé en ce que** l'introduction d'un mandrin (5, 8) dans plusieurs alvéoles (3) s'effectue simultanément.

## Claims

1. A method for a junction between a first acoustic panel (2) having a cellular structure of the honeycomb type, and a second panel (2'), comprising the steps aiming at:
- introducing at least one mandrel (5, 8) having a shape adapted to the cells (3), into at least one cell (3) located in proximity to a junction edge (6) of the acoustic panel,
- having a roller (12) pass over said junction edge of the acoustic panel,
- joining together the junction edge of the acoustic panel with a junction edge (6') of the second panel and firmly attaching them by applying a connecting means.

2. The method according to claim 1, **characterized in that** the connecting means is an adhesively bonding means.

3. The method according to claim 2, **characterized in that** the adhesively bonding means is an adhesive film applied on at least one of the two junction edges (6, 6').

4. The method according to claim 1, **characterized in that** the second panel is an acoustic panel (2') having a cellular structure.

5. The method according to claim 4, **characterized in that** the steps for introducing a mandrel (5, 8) and for passage of a roller (12) are also carried out on the second acoustic panel (2').

6. The method according to any of claims 1 to 5, **characterized in that** a mandrel (5, 8) is introduced into each of the cells (3) located in proximity to the junction edge (6, 6').

7. The method according to any of claims 1 to 6, **characterized in that** the introduction of a mandrel (5, 8) into several cells (3) is carried out simultaneously.

## Patentansprüche

1. Verfahren zum Verbinden einer ersten Akustikplatte (2), die eine Zellenstruktur vom Typ Bienenwabe besitzt, mit einer zweiten Platte (2'), das die Schritte umfasst, die abzielen auf:
- das Einführen mindestens eines Dorns (5, 8), der eine an die Zellen (3) angepasste Form besitzt, in mindestens eine Zelle (3), die sich in der Nähe eines Verbindungsrands (6) der Akustikplatte befindet,
- das Führen einer Rolle (12) über den Verbindungsrand der Akustikplatte,
- das Verbinden des Verbindungsrands der Akustikplatte mit dem Verbindungsrand (6') der zweiten Platte und Zusammenschließen durch Auftragen eines Verbindungsmittels.

2. Verfahren nach Anspruch 1, **dadurch gekennzeichnet, dass** das Verbindungsmittel ein Klebemittel ist.

3. Verfahren nach Anspruch 2, **dadurch gekennzeichnet, dass** das Klebemittel eine Klebstoffschicht ist, die auf mindestens einen der Verbindungsränder (6, 6') aufgetragen wird.

4. Verfahren nach Anspruch 1, **dadurch gekennzeichnet, dass** die zweite Platte eine Akustikplatte (2') ist, die eine Zellenstruktur besitzt.

5. Verfahren nach Anspruch 4, **dadurch gekennzeichnet, dass** die Schritte des Einführens eines Dorns (5, 8) und des Führens einer Rolle (12) auch auf der zweiten Akustikplatte (2') durchgeführt werden.

6. Verfahren nach einem der Ansprüche 1 bis 5, **dadurch gekennzeichnet, dass** in jede der Zellen (3), die sich in der Nähe des Verbindungsrands (6, 6') befinden, ein Dorn (5, 8) eingeführt wird.

7. Verfahren nach einem der Ansprüche 1 bis 6, **dadurch gekennzeichnet, dass** das Einführen eines Dorns (5, 8) in mehrere Zellen (3) gleichzeitig erfolgt.
